## Europäisches Patentamt
## European Patent Office
## Office européen des brevets

(11) Veröffentlichungsnummer: **0 248 146**
**B1**

(12) # EUROPÄISCHE PATENTSCHRIFT

(45) Veröffentlichungstag der Patentschrift:
21.06.89

(21) Anmeldenummer: 87102575.5

(22) Anmeldetag: 24.02.87

(51) Int. Cl.⁴: **C 07 C 87/00,** C 07 C 91/26,
C 08 G 18/18, C 07 C 5/02

(54) Umsetzungsprodukte und ihre Verwendung als Katalysatoren bei Herstellung von Kunststoffen auf Isocyanatbasis.

(30) Priorität: 08.03.86 DE 3607667
27.03.86 DE 3610434

(43) Veröffentlichungstag der Anmeldung:
09.12.87 Patentblatt 87/50

(45) Bekanntmachung des Hinweises auf die Patenterteilung:
21.06.89 Patentblatt 89/25

(84) Benannte Vertragsstaaten:
AT BE CH DE ES FR GB IT LI NL SE

(56) Entgegenhaltungen:
EP-A-0 063 930
EP-A-0 122 649
WO-A-83/03415
DE-A-2 812 256
DE-C-886 306

Die Akte enthält technische Angaben, die nach dem Eingang der Anmeldung eingereicht wurden und die nicht in dieser Patentschrift enthalten sind.

(73) Patentinhaber: BAYER AG, D-5090 Leverkusen 1
Bayerwerk (DE)

(72) Erfinder: **Schmidt, Manfred, Dr., Zeisigstrasse 5,
D-4047 Dormagen (DE)**
Erfinder: **Sommerfeld, Claus- Dieter, Dr.,
Oberdreisbach Höhe 42, D-5203 Much (DE)**
Erfinder: **Prolingheuer, Christoph Dr., 504 Milbeth
Drive, Pittsburgh, PA 15 228 (US)**
Erfinder: **Klän, Walter, August- Kekulé- Strasse 12,
D-5090 Leverkusen 1 (DE)**

**Beschreibung**

Die vorliegende Erfindung betrifft neuartige Umsetzungsprodukte auf Basis tertiärer Amine, die als Katalysatoren bei der Herstellung von Kunststoffen auf Isocyanatbasis, vorzugsweise von Polyurethankunststoffen, verwendet werden können. Kennzeichnend für die erfindungsgemäßen Umsetzungsprodukte ist, daß das tertiäre Amin mit einer Mischung aus Borsäure und einer Mono- und/oder Polycarbonsäure, gegebenenfalls in einem organischen Lösungsmittel, umgesetzt worden ist.

Die Verwendung von Salzkatalysatoren auf Basis von tertiären Aminen und Mineralsäuren oder organischen Mono- und Polycarbonsäuren bei der Herstellung von Polyurethanschaumstoffen ist bereits bekannt.

So sind in der GB-PS-1 083 394 Katalysatoren aus tertiären Aminen und Mineralsäuren wie Salzsäure, Bromwasserstoff, Schwefelsäure, Salpetersäure und Phosphorsäure beschrieben, wobei 0,015 bis 0,80 Äquivalente Säure pro Äquivalent Amin eingesetzt werden, und die US-PS-3 193 515 beschreibt den Einsatz von Salzen aus der mit Glykolen oder Glycerin veresterten Borsäure mit Triethylendiamin.

Ebenso bekannt ist die Verwendung von Salzkatalysatoren aus tertiären Aminen und organischen Sulfonsäuren und Mono- und Polycarbonsäuren (GB-PS-839 185, GB-PS-794 051, DE-OS-2 357 859 und DE-OS-2 812 256), die zu Polurethanschaumstoffen mit meist hinreichend guten Eigenschaften, oft aber nicht ausreichendem Expansionsvermögen führen.

Insbesondere an Polyurethanhartschaumstoff-Systeme werden nun häufig hohe Anforderungen bezüglich Fließ- und Expansionsvermögen gestellt. Das trifft vor allem in den Fällen zu, wo Gehäuse mit komplizierten Fließwegen, z. B. Kühlmöbelgehäuse, oder besonders langen Fließwegen, z. B. Surfbrett-Hohlkörper, ausgeschäumt werden müssen.

Bei diesen Anwendungen ist unter Einsatz der bekannten Salzkatalysatoren bzw. der entsprechenden tertiären Ausgangsamine häufig eine erhöhte Einfüllmenge an Polyurethan-Reaktionsgemisch erforderlich, um die auszuschäumenden Gehäuse hinreichend zu füllen und den Anforderungen an die physikalischen Eigenschaften des Hartschaumstoffes wie Druckfestigkeit und Dimensionsstabilität bei tiefen Temperaturen gerecht zu werden.

Das Expansionsvermögen kann zwar durch eine Erhöhung des Anteils an Treibmitteln wie Fluorkohlenwasserstoffen erhöht werden; nachteilig wirkt sich dabei jedoch häufig eine vermehrte Bildung von störenden Treibmittelblasen an der Schaumstoffoberfläche sowie eine verminderte Lagerstabilität der treibmittelhaltigen Polyolformulierung aus.

Der Erfindung liegt daher die Aufgabe zugrunde, Katalysatoren zur Verfügung zu stellen, die gegenüber den bekannten Katalysatoren ein verbessertes Expansionsvermögen aufweisen. Darüberhinaus sollten die Katalysatoren möglichst geruchlos bzw. geruchsarm sein und somit nicht die üblicherweise bei vielen tertiären Aminen auftretende Geruchsbelästigung verursachen.

Überraschenderweise wurde nun gefunden, daß hierfür als Katalysatoren Umsetzungsprodukte geeignet sind, die aus einem tertiären Amin und einer Mischung aus Borsäure und einer Mono- und/oder Polycarbonsäure, gegebenenfalls in Gegenwart eines Lösungsmittels, erhalten worden sind.

Gegenstand der vorliegenden Erfindung sind somit Umsetzungsprodukte von tertiären Aminen und einer Mischung aus Borsäure und Mono- und/oder Polycarbonsäuren wobei solche Umsetzungsprodukte, bei denen Chinin das tertiäre Amin darstellt (derartige Produkte sind als therapeutische Mittel aus der DE-C-886 306 bekannt geworden) ausgenommen sind.

Erfindungsgemäß bevorzugt sind solche Umsetzungsprodukte, die bei einem molaren Verhältnis der tertiären Amine zu den Säuren von 1 : 0,1 bis 1 : 10, vorzugsweise 1 : 0,9 bis 1 : 1,2 erhältlich sind.

Bevorzugt sind ferner solche Umsetzungsprodukte, die bei einem molaren Verhältnis von Borsäure zu Mono- und/oder Polycarbonsäure von 1 : 100 bis 1 : 0,01, vorzugsweise von 1 : 20 bis 1 : 0,1 und besonders bevorzugt von 1 : 15 bis 1 : 1 erhältlich sind.

Vorzugsweise sind die tertiären Amine $C_1$-$C_4$-Peralkyl-diethylentriamim, N,N'-Tetramethylhexamethylendiamin, Dimethylethanolamin, N-Methyl-N'-dimethylaminoethylpiperazin, Dimethylbenzylamin, N-Dimethyl-N'-formylethylendiamin und/oder Triethylamin.

Als tertiäres Amin ist N,N-Dimethylcyclohexylamin ganz besonders vorteilhaft.

Bevorzugte Polycarbonsäuren sind Dicarbonsäuren, vorzugsweise Bernsteinsäure, Glutarsäure oder Adipinsäure oder deren im Herstellungsprozess anfallende Mischungen mit Nebenprodukten, insbesondere mit den entsprechenden Anhydriden.

Vorteilhafterweise sind die Umsetzungsprodukte in Lösungsmitteln gelöst; bevorzugtes Lösungmittel ist Glycerin oder Ethylenglykol.

Gegenstand der Erfindung ist auch die Verwendung der Umsetzungsprodukte als Katalysatoren bei der Herstellung von gegebenenfalls zellförmigen Kunststoffen aus Isocyanatbasis, insbesondere bei der Herstellung von gegebenenfalls zellförmigen Polyurethankunststoffen.

Die erfindungsgemäßen Umsetzungsprodukte können als reine salzartige Verbindungen oder auch in Mischung mit ihren Ausgangsverbindungen vorliegen.

Die erfindungsgemäßen Umsetzungsprodukte können lösungsmittelfrei eingesetzt werden. Zur besseren Handhabung sowohl bei der Herstellung als auch bei ihrer Verwendung als Katalysatoren ist jedoch die Anwendung eines Lösungsmittels bevorzugt. Als Lösungsmittel kommen alle organischen und anorganischen Lösungsmittel in Frage, in der sich die Umsetzungsprodukte lösen, z. B. Wasser, Dimethylsulfoxid, Dimethylformamid, Acetonitril, Dioxan, Tetrahydrofuran, Polyole wie Ethylenglykol, Diethylenglykol und weitere Homologe bzw. deren Methylether, Propylenglykol, Dipropylenglykol und weitere Homologe bzw. der Methylether. Bevorzugt sind im Polyurethankunststoff einbaubare Alkohole, wie Ethylenglykol, Propylenglykol oder Glycerin.

Zur Herstellung der erfindungsgemäßen Umsetzungsprodukte sind z. B. folgende Ausgangskomponenten geeignet:

a) Tertiäre Amine:

Triethylamin, Tributylamin, N-Methylmorpholin, H-Ethylmorpholin, N,N,N′,N′-Tetramethyl-ethylendiamin, Pentamethyl-diethylentriamin und höhere Homologe (DE-OS-2 624 527 und 2 624 528), 1,4-Diazabicyclo-(2,2,2)-octan, N-Methyl-N′-dimethylaminoethylpiperazin, Bis-(dimethylaminoalkyl)-piperazine (DE-OS-2 636 787), N,N-Diethylbenzylamin, Bis-(N,N-diethylaminoethyl)-adipat, N,N,N′,N′-Tetramethyl-1,3-butandiamin, N,N-Dimethyl-β-phenyl-ethylamin, 1,2-Dimethylimidazol, 2-Methylimidazol, monocyclische und bicyclische Amidine (DE-OS-1 720 633), Bis-(dialkylamino)-alkylether (US-PS-3 330 782, DE-AS-1 030 558, DE-OS-1 804 361 und 2 618 280) sowie Amidgruppen (vorzugsweise Formamidgruppen) aufweisende tertiäre Amine gemäß den DE-OS-2 523 633 und 2 732 292). Es kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine sind z. B. Triethanolamin, Triisopropanolamin, N-Methyldiethanolamin, N-Ethyldiethanolamin, N,N-Dimethylethanolamin, deren Umsetzungsprodukte mit Alkylenoxiden wie Propylenoxid und/oder Ethylenoxid sowie sekundär-tertiäre Amine gemäß DE-OS-2 732 292.

b) Mono- und/oder Polycarbonsäuren:

Monocarbonsäuren wie z. B. Ameisensäure, Essigsäure, halogenierte Essigsäuren, wie Trifluor, Chlor-, Dichlor-, Trichlor-, Bromessigsäure, Propionsäure, halogenierte Propionsäure, wie 2-Chlor-, 3-Chlor-, 2,2,3-Trichlor-, 2-Brompropionsäure, Buttersäure, i-Buttersäure, Pentansäure und ihre Isomere, Hexansäure und ihre Isomere, 2-Ethylhexansäure, Dodecansäure, Tetradecansäure, Hexadecansäure, Octadecansäure, ungesättigte Monocarbonsäure, wie z. B. Acrylsäure, Butensäure, Methacrylsäure, Undecensäure, Ölsäure, Sorbinsäure, Linolsäure, Dicarbonsäuren, wie z. B. Oxalsäure, Malonsäure, Bernsteinsäure, Glutarsäure, Adipinsäure, Korksäure, Azelainsäure, Trimethyladipinsäure, Sebacinsäure, Dodecandisäure, Fumarsäure, Itaconsäure und Polycarbonsäuren, wie z. B. Butantetracarbonsäure, Carbonsäuren mit funktionellen Gruppen, wie z. B. Milchsäure, Ricinolsäure, Bis-(hydroxymethyl)-propionsäure, Hydroxybutandisäure, Dihydroxybutandisäure, Zitronensäure, Schleimsäure, Isocyclische Carbonsäure, wie Cyclohexancarbonsäure, Cyclohexancarbonsäure, Benzoesäure, Chlor-, Dichlor-, Brom-, Nitro-, Chlornitro- und Dinitrobenzoesäure, Phenylessigsäure, Toluylsäure und weiter alkylierte Benzoesäuren, Naphthalincarbonsäure, Hetsäure, Benzoldicarbonsäure, Phenylphthalsäure, Benzoltri- bzw. -tetracarbonsäure, Hydroxybenzoesäure und weitere substituierte Benzoesäuren.

Erfindungsgemäß lassen sich diese Carbonsäuren entweder als Reinsubstanzen oder als Mischungen, wie sie im technischen Herstellungsprozess anfallen und demzufolge z. B. mit den entsprechenden Anhydriden verunreinigt sind, einsetzen.

c) Borsäure.

Die lösungsmittelfreie Herstellung der Umsetzungsprodukte erfolgt durch einfaches Zusammengeben von Amin, Borsäure und Mono- und/oder Polycarbonsäure. Zur Homogenisierung wird bei erhöhter Temperatur nachgerührt. Die Umsetzungsprodukte sind bei Raumtemperatur entweder viskose Flüssigkeiten oder Feststoffe (s. Bsp. 1).

Handelt es sich um Feststoffe, so kann man auch so verfahren, daß man die Säuremischung als Lösung vorlegt und durch Zutropfen des Amins das Salz ausfällt und zur Isolierung abfiltriert.

Zur leichteren Herstellung der neuen Umsetzungsprodukte und auch zur besseren Anwendung ist es erfindungsgemäß bevorzugt, sie in Gegenwart eines Lösungsmittels herzustellen. Hierzu wird das Gemisch aus Borsäure und Carbonsäure in dem gewünschten Lösungsmittel bei einer beliebigen Temperatur, vorzugsweise bei 0° - 150°C, besonders bevorzugt bei 10 - 100°C, vorgelegt und das Amin als Reinsubstanz oder als Lösung in dem gleichen Lösungsmittel zugetropft. Je nach Amin verläuft diese Reaktion mehr oder weniger exotherm. Zur Homogenisierung wird der Ansatz noch 2 - 5 h bei einer Temperatur von 10 - 150°C, bevorzugt 30 - 100°C, nachgerührt. Die so erhaltenen Lösungen können je nach Lösungsmittel in Konzentrationen von 1 - 99 %, bevorzugt sind 50 - 90 %, hergestellt werden (Beispiel 2).

Die neuen Umsetzungsprodukte werden vorteilhaft als Katalysatoren bei der Herstellung von gegebenenfalls zellförmigen Kunststoffen auf Isocyanatbasis verwendet. Die Herstellung derartiger Kunststoffe, die Urethan- und/oder Harnstoff- und/oder Icocyanurat- und/oder Biuret- und/oder Allophanatgrupen aufweisen, ist an sich bekannt und z. B. im Kunststoff-Handbuch, Band VII, Polyurethane, herausgegeben von Vieweg und Höchtlen, Carl-Hanser-Verlag, München 1966, und in der Ausgabe von G. Örtel, Carl-Hanser-Verlag, München, Wien 1983, eingehend beschrieben.

Vorzugsweise werden die neuen Umsetzungsprodukte als Katalysatoren bei der Herstellung von gegebenenfalls zellförmigen Polyurethankunststoffen verwendet.

Zur Heretellung von gegebenenfalls zellförmigen Polyurethankunststoffen werden eingesetzt:

3

1. Als Ausgangskomponenten aliphatische, cycloaliphatische, araliphatiache, aromatische und heterocyclische Polyisocyanate, wie sie z. B. von W. Siefken im Justus Liebigs Annalen der Chemie, 562, Seiten 75 bis 136, beschrieben werden, beispielsweise solche der Formel

$$Q(NCO)_n$$

in der

n = 2 - 4, vorzugsweise 2 - 3, und
Q einen aliphatischen Kohlenwasserstoffrest mit 2 - 18, vorzugsweise 6 - 10 C-Atomen,
   einen cycloaliphatischen Kohlenwasserstoffrest mit 4 - 15, vorzugsweise 5 - 10 C-Atomen,
   einen aromatischen Kohlenwasserstoffrest mit 6 - 15, vorzugsweise 6 - 13 C-Atomen,
   oder einen araliphatischen Kohlenwasserstoffrest mit 8 - 15, vorzugsweise 8 - 13 C-Atomen,

bedeuten, z. B. solche Polyisocyanate, wie sie in der DE-OS-2 832 253, Seiten 10 - 11, beschrieben werden.
   Besonders bevorzugt werden im der Regel die technisch leicht zugänglichen Polyisocyanate, z. B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner Verbindungen mit mindestens zwei gegenüber Isocyanaten reaktionsfähigen Wasserstoffatomen von einem Molekulargewicht in der Regel von 400 - 10 000. Hierunter versteht man neben Aminogrupen, Thiogruppen oder Carboxylgruppen aufweisende Verbindungen, vorzugsweise Hydroxylgruppen aufweisende Verbindungen, insbesondere zwei bis acht Hydroxylgruppen aufweisende Verbindungen, speziell solche vom Molekulargewicht 1 000 bis 6 000, vorzugsweise 2 000 bis 6 000, z. B. mindestens 2, in der Regel 2 bis 8, vorzugsweise aber 2 bis 6, Hydroxylgruppen aufweisende Polycarbonate und Polyesteramide, wie sie für die Herstellung von homogenen und von zellförmigen Polyurethanen an sich bekannt sind und wie sie z. B. in der DE-OS-2 832 253, Seiten 11 - 18, beschrieben werden.

3. Gegebenenfalls als Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in derr Regel 2 bis 8, vorzugsweise 2 bis 4, gegenüber Isocyanaten reaktionsfähige Wasserstoffatome auf. Beispiele hierfür werden in der DE-OS-2 832 253, Seiten 19 - 20, beschrieben.

4. Gegebenenfalls Hilfs- und Zusatzmittel wie
a) Wasser und/oder leicht flüchtige organische Substanzen als Treibmittel,
b) Zusätzliche Katalysatoren der an sich bekannten Art in Mengen von bis zu 100 Gew.-%, bezogen auf die Mengen an erfindungsgemäß zu verwendenden Katalysatoren,
c) oberflächenaktive Zusatzstoffe, wie Emulgatoren und Schaumstabilisatoren,
d) Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trischlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS-2 732 292, Seiten 21 - 24, beschrieben.
   Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 - 113 beschrieben.
   Bei der Herstellung der gegebenenfalls zellförmigen Polyurethankunststoffe werden die neuen Umsetzungsprodukte in der Regel als Katalysatoren in einer Menge von 0,1 - 30 Gew.-Teilen, bevorzugt 0,5 - 20 Gew.-Teilen, und besonders bevorzugt in einer Menge von 1 - 8 Gew.-Teilen, bezogen auf 100 Gew.-Teile der Verbindungen mit mindestens zwei gegenüber Isocyanaten reaktionsfähigen Wasserstoffatomen von einem Molekulargewicht von 400 - 10 000 und gegebenenfalls solcher Verbindungen mit einem Molekulargewicht von 32 - 399, eingesetzt.

Durchführung des Verfahrens zur Herstellung von Polyurethankunststoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-PS-2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 205, beschrieben.

Erfindungsgemäß lassen sich auch kalthärtende Schaumstoffe herstellen (vgl. GB-PS-1 162 517, DE-OS-2 153 086).

Selbstverständlich können aber auch Schaumstoffe durch Blockverschäumung oder nach dem an sich bekannten Doppeltransportbandverfahren hergestellt werden.

Erfindungsgemäß bevorzugt ist die Schaumstoffherstellung nach dem Vorschäumverfahren ("frothing process"; vgl. z. B. Kunststoff-Handbuch Band VII, herausgegeben von Vieweg und Höchtlen, Carl-Hanser-Verlag, München 1966, S. 455, 456, 509, 534).

Die erfindungsgemäß herstellbaren Polyurethanschäume sind weich, halbhart und bevorzugt hart. Sie dienen z. B. zur Kühlmöbelisolierung, ferner zur Erstellung von Sprühisolierungen, Überschichtungen und als Einkomponentenschaum.

**Beispiel 1**

Herstellung verschiedener Umsetzungsprodukte

Die einzelnen Komponenten Amin, Borsäure, Carbonsäure werden jeweils vorgelegt und bis zur Homogenisierung bei verschiedenen Temperaturen ($\leqslant$ 180°C) verrührt. Nach dem Abkühlen erhält man bei Raumtemperatur niedrig-hochviskose Harze (s. Tab.1).

**Beispiel 2**

Zur Herstellung der gelösten Umsetzungsprodukte werden diese direkt in den angeführten Lösungsmitteln bei Temperaturen unterhalb von 100°C hergestellt. Die Umsetzungsprodukte resultieren in allen Fällen als leicht handhabbare Flüssigkeiten (s. Tab.2).

**Beispiel 3**

90 g     eines Polyethers der Hydroxylzahl 465, welcher durch Anlagerung von Propylenoxid an eine wässrige Saccharose-Lösung entstanden ist,

10 g     eines Polyethers der Hydroxylzahl 650, der durch Anlagerung von Propylenoxid an Ethylendiamin erhalten worden ist,

2 g     eines Siloxanpolyethercopolymers als Schaumstabilisator,

2 g     Wasser und

2 g     Dimethylcyclohexylamin wurden vermischt.

100 g     dieser Mischung wurden mit

5 g     der erfindungsgemäßen Umsetzungsprodukte G und

37 g     Monofluortrichlormethan als Treibmittel mittels Laborrührer intensiv vermischt.

Dieses Gemisch wurde mit 148 g rohem 4,4'-Diisocyanatodiphenylmethan verschäumt. Es entstand ein harter Polyurethanschaumstoff. Verschäumungs- und physikalische Daten:

Liegezeit (sec)     : 14
Abbindezeit (sec)     : 84
freie Rohdichte (kg/m$^3$)     : 20,5
Zellbild     : fein

**Beispiel 4**

90 g eines Polyethers der Hydroxylzahl 465, welcher durch Anlagerung von Propylenoxid an eine wässrige Saccharose-Lösung entstanden ist,

10 g eines Polyethers der Hydroxylzahl 650, der durch Anlagerung von Propylenoxid an Ethylendiamin erhalten worden ist,

2 g eines Siloxanpolyethercopolymers als Schaumstabilisator,

2 g Wasser und

2 g Dimethylcyclohexylamin wurden vermischt.

100 g dieser Mischung wurden mit

2 g des erfindungsgemäßen gelösten Umsetzungsproduktes Y und

35 g Monofluortrichlormethan als Treibmittel mittels Laborrührer intensiv vermischt.

Dieses Gemisch wurde mit 148 g rohem 4,4',Diisocyanatodiphenylmethan verschäumt. Es entstand ein harter Polyurethanschaumstoff. Verschäumungs- und physikalische Daten:

Liegezeit (sec)      : 13
Abbindezeit (sec)    : 80
freie Rohdichte (kg/m$^3$)  : 23
Zellbild             : sehr fein

**Beispiel 5**

90 g eines Polyethers der Hydroxylzahl 465, welcher durch Anlagerung von Propylenoxid an eine wässrige Saccharose-Lösung entstanden ist,

10 g eines Polyethers der Hydroxylzahl 650, der durch Anlagerung von Propylenoxid an Ethylendiamin erhalten worden ist,

2 g eines Siloxanpolyethercopolymers als Schaumstabilisator,

2 g Wasser und

2 g Dimethylcyclohexylamin wurden vermischt.

100 g dieser Mischung wurden mit

2,8 g des erfindungsgemäßen gelösten Umsetzungsproduktes T und

35 g Monofluortrichlormethan als Treibmittel mittels Laborrührer intensiv vermischt.

Dieses Gemisch wurde mit 148 g rohem 4,4'-Diisocyanatodiphenylmethan verschäumt. Es entstand ein harter Polyurethanschaumstoff. Verschäumungs- und physikalische Daten:

Liegezeit (sec)      : 8
Abbindezeit (sec)    : 80
freie Rohdichte (kg/m$^3$)  : 22
Zellbild             : sehr fein

**Beispiel 6**

90 g eines Polyethers der Hydroxylzahl 465, welcher durch Anlagerung von Propylenoxid an eine wässrige Saccharose-Lösung entstanden ist,

10 g eines Polyethers der Hydroxylzahl 650, der durch Anlagerung von Propylenoxid an Ethylendiamin erhalten worden ist,

2 g eines Siloxanpolyethercopolymers als Schaumstabilisator,

2 g Wasser und

2 g Dimethylcyclohexylamin wurden vermischt.

100 g dieser Mischung wurden mit

EP 0 248 146 B1

3 g des erfindungsgemäßen gelösten Umsetzungsproduktes K und
35 g Monofluortrichlormethan als Treibmittel mittels Laborrührer intensiv vermischt.

Dieses Gemisch wurde mit 145 g rohem 4,4'-Diisocyanatodiphenylmethan verschäumt. Es entstand ein harter Polyurethanschaumstoff. Verschäumungs- und physikalische Daten:

Liegezeit (sec) : 9
Abbindezeit (sec) : 70
freie Rohdichte (kg/m$^3$) : 21
Zellbild : fein


**Beispiel 7**


90 g eines Polyethers der Hydroxylzahl 465, welcher durch Anlagerung von Propylenoxid an eine wässrige Saccharose-Lösung entstanden ist,
10 g eines Polyethers der Hydroxylzahl 650, der durch Anlagerung von Propylenoxid an Ethylendiamin erhalten worden ist,
2 g eines Siloxanpolyethercopolymers als Schaumstabilisator,
2 g Wasser und
2 g Dimethylcyclohexylamin wurden vermischt.

100 g dieser Mischung wurden mit
3 g des erfindungsgemäßen gelösten Umsetzungsproduktes M und
35 g Monofluortrichlormethan als Treibmittel mittels Laborrührer intensiv vermischt.

Dieses Gemisch wurde mit 148 g rohem 4,4'-Diisocyanatodiphenylmethan verschäumt. Es entstand ein harter Polyurethanschaumstoff. Verschäumungs- und physikalische Daten:

Liegezeit (sec) : 12
Abbindezeit (sec) : 82
freie Rohdichte (kg/m$^3$) : 21
Zellbild : fein


**Beispiel 8**


60 g eines Polyethers der Hydroxylzahl 950, welcher durch Anlagerung von Propylenoxid an Trimethylpropan erhalten worden ist,
40 g eines Polyethers der Hydroxylzahl 56, der durch Anlagerung von Propylenoxid an Trimethylpropan erhalten worden ist,
0,5 g Wasser und
2 g eines Siloxanpolyethercopolymers als Schaumstabilisator wurden vermischt.

100 g dieser Mischung wurden mit
3 g des erfindungsgemäßen gelösten Umsetzungsproduktes T und
10 g Monofluortrichlormethan als Treibmittel mittels Laborrührer intensiv vermischt.

Dieses Gemisch wurde mit 164 g rohem 4,4'-Diisocyanatodiphenylmethan verschäumt. Es entstand ein harter massiver Polyurethankunststoff. Verschäumungs- und physikalische Daten:

Liegezeit (sec) : 80
Abbindezeit (sec) : 130
freie Rohdichte (kg/m$^3$) : 73
Gesamtrohdichte verdichtet (kg/m$^3$) : 350
Zellbild : fein

7

**Beispiel 9**

91 g eines Polyethers der Hydroxylzahl 56, der durch Anlagerung von Propylenoxid an Trimethylolpropan erhalten worden ist,
9 g Monoethylenglykol und
0,1 g Wasser wurden vermischt.

100 g dieser Mischung wurden mit
3 g des erfindungsgemäßen gelösten Umsetzungsproduktes T und
15 g Monofluortrichlormethan als Treibmittel mittels Laborrührer intensiv vermischt.

Dieses Gemisch wurde mit 56 g rohem 4,4'-Diisocyanatodiphenylmethan verschäumt. Es entstand ein zähelastischer Polyurethanschaumstoff. Verschäumungs- und physikalische Daten:

Liegezeit (sec)              : 35
Abbindezeit (sec)            : 105
freie Rohdichte (kg/m$^3$)   : 127
Zellbild                     : fein

**Beispiel 10**

100 g eines Polyethers der Hydroxylzahl 56, der durch Anlagerung von Propylenoxid an Trimethylolpropan erhalten worden ist,
3 g Wasser,
1 g eines Siloxanpolyethercopolymers als Schaumstabilisator und
0,05 g Dibutylzinndilaurat wurden vermischt.
100 g dieser Mischung wurden dann mit
2,5 g des erfindungsgemäßen gelösten Umsetzungsproduktes T mittels Laborrührer intensiv vermischt.

Dieses Gemisch wurde mit 41 g Toluylendiisocyanat verschäumt. Es entstand ein weicher Polyurethanschaumstoff. Verschäumungs- und physikalische Daten:

Liegezeit (sec)              : 7
Abbindezeit (sec)            : 90
freie Rohdichte (kg/m$^3$)   : 30
Zellbild                     : fein

**Tabelle 1**: Umsetzungsprodukte (konz. Salzmischungen)

| Amin (10 mol) | Borsäure (mol) | Säure (mol) | | Harz | Nr. |
|---|---|---|---|---|---|
| N,N-Dimethylcyclohexylamin | 1 | techn. Glutarsäure (9) | | niedrigviskos | A |
| „ | 1 | Glutarsäure (4,5) Bernsteinsäure (2,5) Adipinsäure (2,0) | | „ | B |
| N,N-Dimethyl-N'-formyl-1,3-diaminopropan | 1 | Weinsäure (9) | | hochviskos | C |
| N,N-Dimethylcyclohexylamin | 2 | techn. Glutarsäure (8) | | niedrigviskos | D |
| N-Methyl-N'-dimethylaminoethylpiperazin | 2 | „ | (8) | „ | E |
| „ | 1 | „ | (9) | mittelviskos | F |
| Diazabicycloundecen | 1 | 2-Ethylhexansäure (9) | | niedrigviskos | G |
| „ | 2 | „ | (8) | mittelviskos | H |

**Tabelle 2**: Umsetzungsprodukte (gelöste Salzmischungen)

| Nr. Amin (10 mol) | Borsäure (mol) | Säure (mol) | Lösungsmittel | Konzentr. (%) |
|---|---|---|---|---|
| J Pentamethyldiethylentriamin | 2 | Adipinsäure (8) | DMSO | 50 |
| K „ | 2 | „ | Diethylenglykol | 80 |
| L N,N-Dimethyl-N'-formyl-1,3-diaminopropan | 1 | Weinsäure (9) | DMSO | 70 |
| M 1,4-Diazabicyclo(2,2,2)-octan | 5 | Glutarsäure (5) | Glycerin | 50 |
| N „ | 2 | Ricinolsäure (8) | Ethylenglykol | 50 |
| O Dimethylaminoethanol | 2 | Stearinsäure „ | DMF | 50 ( > 30° C) |
| P Dimethylbenzylamin | 2 | Essigsäure „ | DMSO | 50 ( > 30° C) |
| Q „ | „ | „ „ | Diethylenglykol | 80 |
| R Tetramethylhexamethyldiamin | 2 | Bernsteinsäure „ | „ | 50 ( > 30° C) |
| S Triethylamin | 2 | Propionsäure (4) Glutarsäure (4) | Ethylenglykol | 60 |
| T N,N-Dimethylcyclohexylamin | 1 | Glutarsäure, techn. (9) | „ | 70 |
| U „ | 1 | „ „ | DMSO | 70 |
| V „ | 2 | Glutarsäure (6) Ricinolsäure (2) | „ | 50 |
| W „ | 2 | Glutarsäure (8) | Dioxan | 80 |
| X N-Methyl-N'-dimethylamino-ethylpiperazin | 2 | Glutarsäure, techn. (6) Ricinolsäure (2) | Diethylenglykol | 50 |
| Y Diazabicycloundecen | 1 | Glutarsäure, techn. (9) | Ethylenglykol | 70 |
| Z „ | 1 | „ „ | DMSO | 70 |

## Patentansprüche

1. Umsetzungsprodukte von tertiären Aminen und einer Mischung aus Borsäure und Mono- und/oder Polycarbonsäuren, ausgenommen solche Umgesetzungsprodukte, bei denen Chinin das tertiäre Amin darstellt.

2. Umsetzungsprodukte gemäß Anspruch 1, erhältlich bei einem molaren Verhältnis der tertiären Amine zu den Säuren von 1 : 0,1 bis 1 : 10, vorzugsweise von 1 : 0,9 bis 1 : 1,2.

3. Umsetzungsprodukte gemäß Ansprüchen 1 und 2, erhältlich bei einem molaren Verhältnis von Borsäure zu Mono- und/oder Polycarbonsäure von 1 : 100 bis 1 : 0,01, vorzugsweise von 1 : 20 bis 1 : 0,1 und besonders bevorzugt von 1 : 15 bis 1 : 1.

4. Umsetzungsprodukte gemäß Ansprüchen 1 - 3, dadurch gekennzeichnet, daß die tertiären Amine $C_1$-$C_4$-Peralkyl-diethylentriamin, N,N'-Tetramethylhexamethylendiamin, Dimethylethanolamin, N-Methyl-N'-dimethylaminoethylpiperazin, Dimethylbenzylamin, N-Dimethyl-N'-formyl-ethylendiamin und/oder Triethylamin sind.

5. Umsetzungsprodkte gemäß Ansprüchen 1 - 3, dadurch gekennzeichnet, daß das tertiäre Amin N,N-Dimethylcyclohexylamin ist.

6. Umsetzungsprodukte gemäß Ansprüchen 1 - 5, dadurch gekennzeichnet, daß die Polycarbonsäuren Dicarbonsäuren, vorzugsweise Bernsteinsäure, Glutarsäure oder Adipinsäure oder deren im Herstellungsprozess anfallende Mischungen mit Nebenprodukten, insbesondere mit den entsprechenden Anhydriden, sind.

7. Umsetzungsprodukte gemäß Ansprüchen 1 - 6, dadurch gekennzeichnet, daß sie in Lösungsmitteln gelöst sind.

8. Umsetzungsprodukte gemäß Anspruch 7, dadurch gekennzeichnet, daß das Lösungsmittel Glycerin oder Ethylenglykol ist.

9. Verwendung der Umsetzungsprodukte gemäß Ansprüchen 1 - 8 als Katalysatoren bei der Herstellung von gegebenenfalls zellförmigen Kunststoffen auf Isocyanatbasis.

10. Verwendung der Umsetzungsprodukte gemäß Ansprüchen 1 - 8 als Katalysatoren bei der Herstellung von gegebenenfalls zellförmigen Polyurethankunststoffen.

## Claims

1. Reaction products of tertiary amines and mixtures of boric acid and mono- and/or polycarboxylic acids, not including those reaction products in which quinine is the tertiary amine.

2. Reaction products as claimed in claim 1 obtainable with a molar ratio of the tertiary amines to the acids of from 1 : 0.1 to 1 : 10 and preferably from 1 : 0.9 to 1 : 1.2.

3. Reaction products as claimed in claims 1 and 2 obtainable with a molar ratio of boric acid to mono- and/or polycarboxylic acid of from 1 : 100 to 1 : 0.1, preferably from 1 : 20 to 1 : 0.1 and more preferably from 1 : 15 to 1 : 1.

4. Reaction products as claimed in claims 1 to 3, characterized in that the tertiary amines are $C_1$-$C_4$ peralkyl diethylene triamine, N,N'-tetramethyl hexamethylene diamine, dimethyl ethanolamine, N-methyl-N'-dimethylaminoethyl piperazine, dimethyl benzyl amine, N-dimethyl-N'-formyl ethylene diamine and/or triethylamine.

5. Reaction products as claimed in claims 1 to 3, characterized in that the tertiary amine is N,N-dimethyl cyclohexylamine.

6. Reaction products as claimed in claims 1 to 5, characterized in that the polycarboxylic acids are dicarboxylic acids, preferably succinic acid, glutaric acid or adipic acid or mixtures thereof with secondary products formed during the production process, particularly the corresponding anhydrides.

7. Reaction products as claimed in claims 1 to 6, characterized in that they are dissolved in solvents.

8. Reaction products as claimed in claim 7, characterized in that the solvent is glycerol or ethylene glycol.

9. The use of the reaction products claimed in claims 1 to 8 as catalysts in the production of optionally cellular isocyanate-based plastics.

10. The use of the reaction products claimed in claims 1 to 8 as catalysts in the production of optionally cellular polyurethane plastics.

## Revendications

1. Produits réactionnels d'amines tertiaires et d'un mélange d'acide borique et d'acides monocarboxyliques et/ou polycarboxyliques, à l'exception des produits réactionnels dans lesquels l'amine tertiaire est la quinine.

2. Produits réactionnels selon la revendication 1, que l'on peut obtenir avec un rapport molaire de 1 : 0,1 à 1 : 10, de préférence de 1 : 0,9 à 1 : 1,2, entre les amines tertiaires et les acides.

3. Produits réactionnels selon les revendications 1 et 2, que l'on peut obtenir avec un rapport molaire de 1 : 100 à 1 : 0,01, de préférence de 1 : 20 à 1 : 0,1, et en particulier de 1 : 15 à 1 : 1, entre l'acide borique et l'acide monocarboxylique et/ou polycarboxylique.

4. Produits reactionnels selon les revendications 1 à 3, caractérisés en ce que les amines tertiaires sont la peralkyl-diéthylènetriamine en $C_1$-$C_4$, la N,N'-tétraméthylhexaméthylènediamine, la diméthyléthanolamine, la N-méthyl-N'-diméthylaminoéthylpiperazine, la diméthylbenzylamine, la N-diméthyl-N'-formyl-éthylènediamine et/ou la triéthylamine.

5. Produits réactionnels selon les revendications 1 à 3, caractérisés en ce que l'amine tertiaire est la N,N'-diméthylcyclohexylamine.

6. Produits réactionnels selon les revendications 1 à 5, caractérisés en ce que les acides polycarboxyliques sont des acides dicarboxyliques, de préférence l'acide succinique, l'acide glutarique ou l'acide adipique, ou des mélanges de ceux-ci produits lors du processus de fabrication avec des produits secondaires, en particulier avec les anhydrides correspondants.

7. Produits réactionnels selon les revendications 1 à 6, caractérisés en ce qu'ils sont en solution dans des solvants.

8. Produits réactionnels selon la revendication 7, caractérisés en ce que le solvant est la glycérine ou l'éthylèneglycol.

9. Utilisation des produits réactionnels selon les revendications 1 à 8 dans la fabrication de matières plastiques, éventuellement cellulaires, à base d'isocyanates.

10. Utilisation des produits réactionnels selon les revendications 1 à 8 comme catalyseurs dans la fabrication de matières plastiques polyurèthaniques éventuellement cellulaires.